# EUROPEAN PATENT SPECIFICATION

(11) **EP 4 081 667 B1**
(45) Date of publication and mention of the grant of the patent: **07.08.2024**
(21) Application number: 20833974.7
(22) Date of filing: 14.12.2020
(51) Int. Cl.: C21C 5/52, C21C 5/56, F27B 3/08, F27D 11/08, F27D 11/10, F27D 19/00, F27D 21/00, H05B 7/152, F27B 3/28

(54) **MELTING METHOD IN AN ELECTRIC ARC FURNACE AND MELTING APPARATUS**
SCHMELZVERFAHREN IN EINEM ELEKTRISCHEN LICHTBOGENOFEN UND SCHMELZVORRICHTUNG
PROCÉDÉ DE FUSION EN FOUR À ARC ÉLECTRIQUE ET APPAREIL DE FUSION ASSOCIÉ

(30) Priority: 23.12.2019 IT 201900025441
(43) Date of publication of application: 02.11.2022
(73) Proprietor: Danieli & C. Officine Meccaniche S.p.A., 33042 Buttrio (IT); Danieli Automation S.P.A., 33042 Buttrio (IT)
(72) Inventor: TERLICHER, Stefano, 33043 CIVIDALE DEL FRIULI (IT); PASSONI, Martino, 33010 TAVAGNACCO (IT)
(74) Representative: Petraz, Gilberto Luigi
(86) International application number: PCT/IT2020/050309
(87) International publication number: WO 2021/130791

(56) References cited:
- WO-A1-2019/207611
- US-A1- 2014 112 365
- US-A1- 2018 195 141
- US-A1- 2019 191 502

## Description

### FIELD OF THE INVENTION

The present invention concerns a melting method in an electric arc furnace and a corresponding melting apparatus.

In particular, the present invention is applied in the field of electric furnaces used for melting metal materials.

Preferred but not restrictive embodiments of the present invention are intended for three-phase electric arc furnaces.

### BACKGROUND OF THE INVENTION

The melting cycle of an arc furnace normally provides the following operating steps:
- charge/charges of metal material, usually scrap, into the furnace by means of baskets unloading from above, or by means of continuous-charge transport apparatuses fed with scrap and/or pre-reduced iron (DRI), or combinations thereof;
- generation of the electric arc, during which the electrodes are lowered toward the metal material until the electric melting arc is triggered, which is generated between the end of the electrodes and the material to be melted;
- perforation of the layer of metal material by means of the electric arc generated, starting the actual melting of the scrap so as to bring it to a completely molten state;
- formation of the molten metal bath;
- refining of the molten material to regulate the temperature of the bath and the carbon content of the steel and/or define a desired composition of the steel by adding chemical components;
- tapping of the molten material present in the electric furnace, after possible slagging.

The loading operations, electric arc generation, and perforation can be repeated several times during a single melting cycle. For example, after a first charge of metal material into the furnace and the melting of said charge, it is possible to introduce another charge of metal material, and subsequently melt this one too, before proceeding with the refining of the molten material.

In the case of a continuous-charge melting process, the melting cycle described above is different and the loading of a first basket into the furnace is generally provided, the subsequent melting to generate a sufficient level of liquid pool and the subsequent continuous introduction of the material to be melted in order to reach a desired quantity to be tapped.

During the perforation steps, the electric arc between the electrodes and the charge of metal material has a very unstable behavior, which progressively improves with the progress of the melting. In the meantime, this causes sudden and unexpected changes in the power absorbed, which also have a negative impact on the power supply network with possible damage to the user machines that it powers. Arc furnaces can be powered by an alternating current transformer or direct current power supplies and it is normally necessary to maintain the balance between the electrical parameters of the electrodes as much as possible, so as not to create disturbances to the network.

Typically, alternating current arc furnaces use three electrodes to melt the material. The electrodes should be subjected to uniform loads and have uniform consumption. The arc that melts the charge material strikes and closes between the electrodes and the material, producing high irradiation. For this reason, the normal positioning of the electrode group in traditional furnaces is in the center of the furnace, so as to have a suitable distance from the walls of the furnace itself.

Direct current arc furnaces strike the arc between a cathode and the material in contact with an anode: these elements can generally consist of two electrodes, or one electrode and one or more metal masses located on the bottom of the furnace.

The electrodes can be raised or lowered but have a fixed position with respect to the furnace body; moreover, normally, they must all be in service at the same time.

As mentioned above, the most known types of charge in arc furnaces comprise the continuous charge, in which the transport system constantly feeds a volume of scrap, combined by size, so as to constitute the volume of the molten bath within the desired times (for example according to a casting/heating time of about 50 min).

Another classic loading system comprises baskets, which normally vary from 2 to 3 and which consist of layers of scrap of different sizes and types, always in order to obtain the desired volume of bath in the casting times.

A third type of charge occurs through systems for feeding pre-reduced iron, usually pneumatic, and/or by means of transport in inert gases.

It is also known to combine some of these scrap-loading systems, for example starting with a basket to form the liquid pool and continuing with continuous loading systems.

In the case of basket charging, the point where the material falls is the center of the furnace, while with a continuous charge the material to be melted is normally discharged in a perimeter zone of the furnace. Therefore, a disposition of the electrodes that is central with respect to the bottom of the furnace is optimal for basket charging, but less so for a continuous charge, since the zone where the material is introduced into the furnace tends to be colder.

In known arc furnaces, the shell of the furnace can be symmetrical or asymmetrical with respect to a central through plane. The asymmetrical shell, that is, degrading on one side with respect to the other with respect to a central plane passing through a slagging door, seems to be particularly suitable to promote the accumulation of the metal charge coming from the continuous charge. Moreover, since it is very deep, once the liquid pool is formed, it is possible to better liquefy the scrap which is discharged by the continuous loading system.

The melting process in known arc furnaces is consistently controlled by the operators, who make use of sensors present on the furnace and of their own experience to carry out the different steps of the melting process or melting cycle. For example, thanks to temperature sensors it is possible to interpret the irradiation suffered by the panels of the furnace, possibly covering the arc, also increasing the volume of the slag.

Furthermore, external probes are normally used, which are inserted in the furnace to measure the temperature of the bath during the different steps, and also sampling probes, to extract metal samples with which to gradually check that the composition reached is in line with the desired one.

With regard to the management of power during the process, it is typically regulated in two ways: regulation of the arc length through the vertical position of the electrodes, that is, raising or lowering them; or through the ratio between primary and secondary of the transformer that powers the furnace, the so-called "tap-changer", which normally follows a profile defined according to the steps of the melting process.

The parameter that allows to control the power is therefore substantially the voltage of the arc.

In the patent application WO-A-2019/2076111 belonging to the proprietors of the present application, a method is described for the electric power supply of an electric arc furnace, and a corresponding apparatus which substantially behaves as an adjustable current generator, where, contrary to the state of the art, the current becomes, in the system, the independent parameter to generate the power to be given to the furnace according to the step of the process in which it is operating, that is, perforation, melting, refining.

Thanks to this method and this apparatus, a stable regulation of the electrodes is obtained, while in standard processes the electrodes are in continuous vertical movement as a result of the instability of the current delivered, because they have to guarantee the persistence of the arc with an uncontrolled current.

The furnace should in fact be considered a highly asymmetrical, discontinuous and non-linear load. To limit possible fluctuations of the current on the mains side, the solution described in application WO-A-2019/2076111 provides to power all the steps, and therefore each electrode, in a substantially uniform manner, distributing the power supplied by the power apparatus equally. The method of powering the electric arc furnace described in this document provides in particular to modify the frequency of the electrical energy supplied to the electrodes during the different steps of the melting process in order to optimize the energy transfer of the process and simultaneously reduce the effects on the mains deriving from the rapid variations in power on the furnace side.

Patent application US-A-2019191502 in the name of the present Applicant describes an apparatus for supplying electrical energy to an electric arc furnace, which comprises a regulation unit to regulate at least one electrical quantity chosen between supply voltage and current of at least one electrode, and positioning means to move the electrode along a vertical axis toward and away from the metal to be melted.

The solutions provided in the two documents cited above do not allow to control and regulate the distribution of the heat energy supplied by the electrodes inside the electric furnace, in such a way as to increase and maximize it on each occasion in different zones of the electric furnace.

In fact it is known that the temperature of the molten metal in the container during melting is not uniform, since there are zones in which the molten metal tends to cool down, for example due to its proximity to the mass of solid metal present in the container, and zones where the molten metal is superheated. It therefore happens that some parts of the furnace, opposite the electrodes, overheat, giving rise to so-called hot spots, which can damage the refractory of the container.

The overheated molten metal is subject to convective phenomena which do not only not allow optimal control of the quality of the metal but also increase wear on the walls, that is, the refractories of the container, with a consequent increase in maintenance interventions, and corresponding additional costs.

These phenomena are generally due to a non-uniform distribution of heat energy, supplied by the electric arcs.

To contrast the non-uniformity of the temperature of the metal material, it is also known to dispose two of the three electrodes aligned with each other and directly facing the discharge zone of the container. Instead, the third electrode faces the hot zone of the container and causes the overheating of the molten metal as above.

Current solutions involve difficulties in controlling the melting cycle of the molten metal and the refining processes thereof.

Furthermore, the difficulties in making the temperatures of the molten metal uniform and controlling them better require an increase in the energy for melting.

Another disadvantage of the state of the art is the long duration of each melting cycle.

One purpose of the present invention is to provide a melting method in an electric furnace which increases the efficiency of the melting process.

It is also a purpose of the invention to perfect a melting method in an electric arc furnace which allows to reduce the time of each melting cycle.

Another purpose of the present invention is to perfect a melting method which allows to control the electric arcs during the melting processes.

It is also a purpose of the present invention to distribute the energy emitted by the electrodes effectively in the desired points, for any type of furnace.

It is also a purpose of the present invention to obtain a more uniform melting process both in terms of melting the solid metal and also in terms of temperature homogeneity of the molten metal.

It is therefore a purpose of the invention to provide a melting apparatus, and to perfect a corresponding method, which allows to reduce the phenomena of wear inside the melting container with a consequent reduction in the maintenance interventions required.

Another purpose of the present invention is to provide a melting apparatus which is simple and economical.

It is also a purpose of the invention to provide a melting apparatus which is efficient, flexible and allows precise and timely regulation of the power delivered by the electrodes, optimizing both the times of the melting cycles and also the overall energy consumption of the melting apparatus.

One purpose of the present invention is also to provide an apparatus and a melting method in an electric arc furnace which allow to maximize and optimize the distribution of the heat energy supplied by the electrodes inside the furnace during the melting process.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes and according to the present invention, a melting method in an electric arc furnace is according to annexed independent claim 1. Other advantageous features are defined in the method dependent claims.

By independently regulating the power supply of the electrodes, it is possible to unbalance the electric power between them and consequently independently control the thermal power supplied by each electrode, in order to concentrate and maximize on each occasion the thermal power in different zones of the electric furnace, where it is most needed.

The differentiation of the power supply between the electrodes, that is, the unbalancing of the respective electric parameters of the power supply, makes it possible to make the melting method particularly flexible, sending the power supplied by the power supply apparatus where it is most needed.

According to some embodiments, each of the electrodes can be connected to a plurality of power supply modules connected in parallel to each other, to the electric power grid and to the electric furnace, wherein each module is configured to transform, rectify and convert the mains voltage and current and supply a supply voltage and a supply current with defined electric parameters.

According to this solution, the differentiated regulation of the power of each of the electrodes can therefore be carried out by activating or deactivating each of the power supply modules, so that each electrode can possibly be supplied with a different electric power supply, and so that each electrode supplies its own thermal power independently from the thermal power supplied by the other electrodes.

Thanks to the power supply modules of each of the electrodes, the present electric power supply method is extremely effective and flexible, allowing a distribution of the thermal power supplied by the electrodes that is not uniform, but is suitable to make the melting of the solid metal material as uniform as possible, reducing the time and energy consumption required.

The method also provides to regulate the thermal power delivered by the electrodes in a determinate zone of the furnace by translating one or more electrodes in a defined direction as a function of the demand for power in that determinate zone of the electric furnace and/or in a determinate phase of the melting cycle.

Regulating the electrodes independently allows to obtain a greater efficiency of the melting plant, with the same overall energy consumptions, or possibly even to reduce energy consumptions.

In fact, in the event it were necessary to increase the thermal power in a determinate zone of the electric furnace, it is possible to increase only the electric power supplied to the electrode(s) located in that zone, keeping the electric power supplied to the electrodes farthest from that same zone constant, or even decreasing it for a determinate interval of time.

According to some embodiment, the regulation of the thermal power delivered by the electrodes can also be carried out by varying the number of electrodes, as a function of the demand for power, in a determinate zone of the electric furnace and/or in a determinate phase of the melting cycle.

According to other embodiments, it can be provided to modify the distribution of the thermal power in different zones of the electric furnace either by unbalancing the thermal power between the electrodes, or by displacing one or more electrodes on a plane orthogonal to an axis of longitudinal development thereof.

According to some embodiments, which can be combined with the previous ones, the present method can comprise the detection, by means of sensors, of the distribution of thermal energy in the different zones of the electric furnace and the calculation, by means of an algorithm, of the optimal energy distribution for the electric furnace as a function of the data detected.

The present method can also comprise memorizing the melting cycles and the energy distribution associated with each melting cycle, so that the control and command unit can automatically self-regulate the thermal power delivered by the electrodes as a function of the data detected and memorized.

The present invention also concerns a melting apparatus according to annexed independent claim 6. Other advantageous features are defined in the apparatus dependent claims.

According to some embodiments, the transformer, the rectifiers, connected to the transformer, and the converters together define a power supply module; the apparatus can be provided with a plurality of power supply modules for each of the electrodes; the power supply modules associated with each electrode are connected in parallel to each other to the electric power grid and to the electric furnace.

The present apparatus comprises movement means able to translate the electrodes in a defined direction transverse to their longitudinal axis from one zone of the furnace to another.

The apparatus can also comprise concentrations of electrodes diversified as a function of the demand for thermal power in a determinate zone of the electric furnace and/or in a determinate phase of the melting cycle.

This diversification of the concentration of electrodes can for example be obtained by providing a greater number of electrodes than the traditional three electrodes, and by providing that a plurality of electrodes, for example two or more electrodes, are concentrated in a determinate zone of the furnace.

The apparatus can also comprise a plurality of sensors distributed in various zones of the electric furnace and able to detect the distribution of energy in the electric furnace and/or other, wherein these sensors are associated with the control and command unit.

In some embodiments, the apparatus can comprise at least one memory unit associated with the control and command unit and able for example to store the data of the various melting cycles of an electric furnace.

The apparatus can also comprise at least one spectrometer for the real-time reading of the chemical composition of the metal material being melted in the electric furnace.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a schematic illustration of an apparatus for melting metal material in accordance with some embodiments of the present invention;
- fig. 2 is another schematic illustration in an enlarge scale of the present melting apparatus;
- figs. 3a and 3b schematically show means for moving the electrodes of the electric furnace;
- fig. 4 schematically shows an electric arc furnace provided with a series of electrodes.

To facilitate comprehension, the same reference numbers have been used, where possible, to identify identical common elements in the drawings. It is understood that elements and characteristics of one embodiment can conveniently be incorporated into other embodiments without further clarifications.

### DESCRIPTION OF SOME EMBODIMENTS

We will now refer in detail to the possible embodiments of the invention, of which one or more examples are shown in the attached drawings. Each example is supplied by way of illustration of the invention and shall not be understood as a limitation thereof. For example, one or more characteristics shown or described insomuch as they are part of one embodiment can be varied or adopted on, or in association with, other embodiments to produce further embodiments. It is understood that the present invention shall include all such modifications and variants.

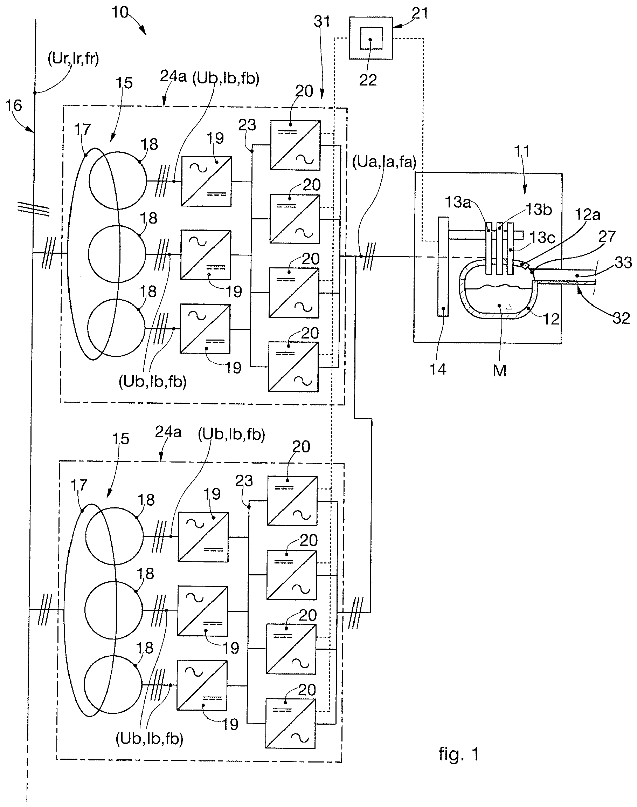

With reference to the attached drawings, fig. 1 shows a melting apparatus 10 according to the present invention, used for melting metal material M.

The melting apparatus 10 comprises an electric arc furnace 11 and a power supply apparatus 31, configured to electrically power the electric furnace 11.

The electric furnace 11 comprises a container 12, or shell, into which metal material M is introduced in order to be subsequently melted.

The container 12 is normally closed at the upper part by a vault 12a.

The loading of the metal material M can take place through the use of baskets, that is, in discontinuous or continuous mode. Furthermore, the metal material can be charged in the form of scrap or in the form of DRI.

The melting apparatus 10 normally comprises a loading device 32 provided to load the metal material M into the container 11.

In accordance with possible solutions, the loading device 32 can be defined, at least in part, by a loading aperture 27 associated with the container 11.

In accordance with possible solutions, the loading device 32 can comprise a transporter 33 suitable to feed, substantially continuously, the metal material.

The loading device 32 can also be selected from a group comprising a conveyor belt, a vibrating channel, an alternating movement mechanism.

According to possible solutions, the loading device 32 can be positioned in correspondence with a lateral wall of the container 12 itself.

According to other embodiments, the loading device 32 can comprise one or more baskets suitable to feed the metal material into the container 12 from above, in a substantially central zone thereof.

The electric furnace 11 is also provided with at least one electrode, and in particular with a plurality of electrodes 13a, 13b, 13c, 13d, which are configured to strike an electric arc through the metal material M and melt it.

According to some embodiments of the present invention, the electrodes 13a, 13b, 13c, 13d are installed on vertical movement means 14 configured to selectively move the electrodes 13a, 13b, 13c toward or away from the metal material M.

The vertical movement means 14 can be configured to translate the electrodes 13a, 13b, 13c, 13d in a direction parallel to their axis of longitudinal development.

The vertical movement means 14 can be selected from a group comprising at least one of either a mechanical actuator, an electric actuator, a pneumatic actuator, a hydraulic actuator, an articulated mechanism, a mechanical kinematics, similar and comparable members or a possible combination of all of the above.

In accordance with one possible solution of the present invention, in the event the number of electrodes 13a, 13b, 13c is three, as shown for example in figs. 1-3b, each of these is connected to a respective power supply phase of the power supply apparatus 31. The number of electrodes 13a, 13b, 13c can also be greater than the number of phases.

In accordance with some embodiments of the present invention, the power supply apparatus 31 comprises at least one transformer 15 connected to an electric power grid 16 for supplying the alternating mains voltage and current and configured to transform the alternating mains supply voltage and current into an alternating base voltage and current.

According to one possible solution of the invention, the electric power grid 16 can be three-phase.

According to some embodiments, the electric power grid 16 can be at medium voltage.

According to possible variants, the electric power grid 16 can be at high voltage for a first segment, and at medium voltage in a second segment, providing a transformer suitable to transform high voltage into medium voltage between the first and second segment.

In accordance with some embodiments of the invention, the mains voltage "Ur" and the mains current "Ir" have a predefined mains frequency "fr".

In accordance with possible solutions, the mains frequency "fr" is a value chosen between 50Hz and 60Hz, that is, based on the frequency of the electric power grid of the country where the furnace is installed.

In accordance with possible solutions of the present invention, the transformer 15 can comprise a transformer primary 17 magnetically coupled to at least one transformer secondary 18.

In accordance with one possible solution of the invention, the transformer 15 can comprise a plurality of transformer secondaries 18 magnetically coupled to the transformer primary 17. This solution allows to reduce the impact of disturbances on the grid side, that is, reduce the harmonic content and the reactive power exchanged on the grid by the combination of the transformer 15 and the rectifier 19.

The base voltage and current supplied by the transformer 15 has a base voltage "Ub", a base current "Ib", and a base frequency "fb", all predefined and set by the design characteristics of the transformer 15 itself.

In particular, the base frequency "fb" is substantially equal to the mains frequency "fr" identified above.

The base voltage "Ub" and the base current "Ib" are instead correlated respectively to the mains voltage "Ur" and to the mains current "Ir" by the transformation ratio of the transformer 15 itself.

The transformer 15, for example of the multi-tap type, can be provided with regulating devices, not shown, which are provided to selectively regulate the electrical transformation ratio of the transformer 15 in relation to specific requirements.

The power supply apparatus 31, according to the present invention, also comprises a plurality of rectifiers 19, connected to the transformer 15 and configured to transform the base alternating voltage and current into direct voltage and current.

Specifically, the rectifiers 19 allow to rectify the base voltage Ub and base alternating current Ib, into respective direct voltages and currents.

The rectifiers 19 can be selected from a group comprising a diode bridge and a thyristor bridge.

In accordance with one possible solution, the rectifiers 19 comprise devices chosen, for example, from a group comprising Diodes, SCR (Silicon Controlled Rectifier), GTO (Gate Turn-Off thyristor), IGCT (Integrated Gate-Commutated Thyristor), MCT (Metal-Oxide Semiconductor Controlled Thyristor), BJT (Bipolar Junction Transistor), MOSFET (Metal-Oxide Semiconductor Field-Effect Transistor) and IGBT (Insulated-Gate Bipolar Transistor).

According to further embodiments of the invention, the power supply apparatus 31 comprises a plurality of converters 20 connected to the rectifiers 19 and configured to convert the direct voltage and current into an alternating supply voltage and current that power the electrodes 13a, 13b, 13c.

In accordance with one possible solution, the converters 20 comprise devices chosen, for example, from a group comprising SCR (Silicon Controlled Rectifier), GTO (Gate Turn-Off thyristor), IGCT (Integrated Gate-Commutated Thyristor), MCT (Metal- Oxide Semiconductor Controlled Thyristor), BJT (Bipolar Junction Transistor), MOSFET (Metal-Oxide Semiconductor Field-Effect Transistor), and IGBT (Insulated-Gate Bipolar Transistor).

According to some embodiments, the converters 20 are connected to the electrodes 13a, 13b, 13c of the electric furnace 11 and to a control and command unit 21 which is configured to control and command the functioning of the converters 20 and to regulate, over time, the alternating energy that powers the electrodes 13a, 13b, 13c.

Specifically, the control and command unit 21 controls the converters 20 in order to selectively set the parameters of the alternating supply voltage and current.

According to some embodiments, the control and command unit 21 is provided with regulating devices 22 configured to regulate the supply electric frequency "fa" of the alternating supply voltage and current, and obtain a contextual variation of the reactance value of the power supply circuit of the electrodes.

Specifically, the supply voltage and current have a supply voltage Ua and a supply current Ia which are selectively regulated in relation to the fusion powers involved.

In accordance with possible solutions of the present invention, the regulating devices 22 can comprise, by way of example only, a hysteresis modulator or a PWM (Pulse-Width-Modulation) modulator.

These types of modulator can be used to command the semiconductor devices of the rectifiers 19 and converters 20. These modulators, suitably controlled, generate voltage or current values to be actuated to the electrodes 13a, 13b, 13c. In particular, the modulator processes these voltage and current values and produces commands for driving at least the rectifiers 19 and the converters 20 so that the voltage and current values required by the control are present at the terminals that provide the connection to the electrodes 13a, 13b, 13c.

The voltages and currents to be actuated are the result of operations carried out by the control and command unit 21 on the basis of the values read by the process and on the basis of the process model.

In accordance with possible solutions, the rectifiers 19 can be connected to the converters 20 by means of at least one intermediate circuit 23 which works in direct current.

The intermediate circuit 23 is configured to store direct electrical energy and generate a separation between the electrodes 13a, 13b, 13c and the rectifiers 19, and therefore with the electric power grid 16.

In particular, the rapid power fluctuations resulting from the process are partly filtered by means of the intermediate circuit 23, reducing the impact on the electric power grid 16 side.

The control and command unit 21 can also be configured to regulate the supply voltage Ua and supply current Ia parameters generated by the converters 20 and supplied to the electrodes 13a, 13b, 13c.

Some solutions of the present invention provide that the control and command unit 21 is also connected, in turn, to the movement means 14 in order to allow an adjustment of the position of the electrodes 13a, 13b, 13c in relation to the different phases of the melting process.

In particular, the electrodes 13a, 13b, 13c are moved by the vertical movement means 14 so as to follow the position of the material and therefore modify the length of the arc.

In this way, the control and command unit 21 can manage and command, in relation to the specific phases of the process, at least the following parameters: supply voltage Ua, supply current Ia, supply electric frequency "fa", and position of the electrodes 13a, 13b, 13c.

The high possibility of controlling the different parameters allows to optimize the transfer of energy to the process and at the same time reduce the effects on the electric power grid 16 resulting from the rapid variations in power on the furnace side.

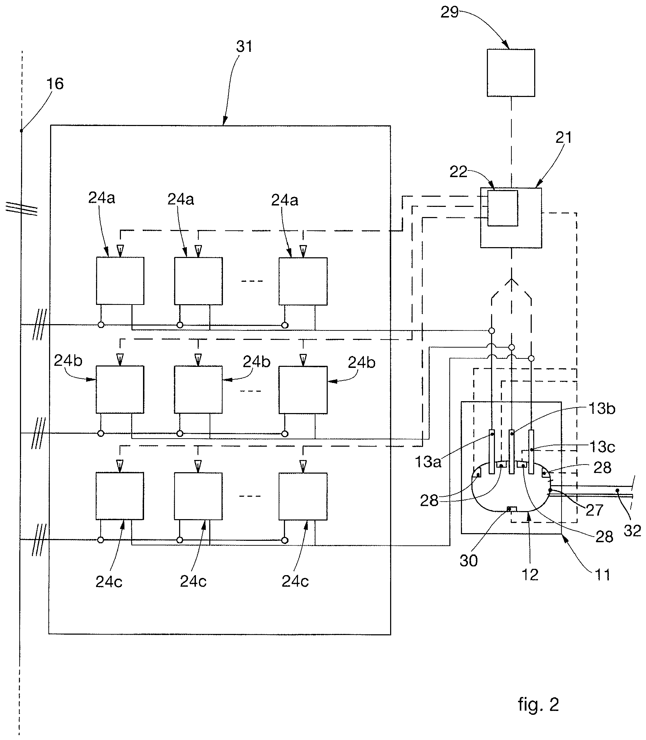

According to possible solutions, the transformer 15, the rectifiers 19, connected to the transformer 15, and the converters 20 together define a power supply module, see for example the power supply modules 24a of fig. 1 and associated with the electrode 13a. See also the power supply modules 24b and 24c associated respectively with the electrodes 13b and 13c and shown schematically in fig. 2.

These power supply modules 24a, 24b, 24c are connected in parallel to each other, to the electric power grid 16 and to the electric furnace 11.

The combination of several power supply modules 24a, 24b, 24c allows to obtain a power supply apparatus 10 which can be scaled in size in relation to the specific size of the electric furnace 11 which has to be powered.

In accordance with one possible solution, the control and command unit 21 is connected to all the power supply modules 24a, 24b, 24c in order to control at least the respective converters 20 so that each module supplies the same supply voltage Ua, current Ia, and electric frequency "fa" values to the electrodes 13a, 13b, 13c. In this way, it is possible to prevent malfunctions of the entire system.

According to some embodiments, for example described with reference to fig. 2, in the present power supply apparatus 10 each electrode 13a, 13b, 13c is associated with a series of power supply modules 24a, 24b, 24c.

According to some embodiments, there can for example be provided five, eight, ten, twenty or more power supply modules for each phase of the three-phase power supply, and therefore for each of the electrodes 13a, 13b, 13c.

According to some embodiments, the power supply modules 24a, 24b, 24c associated with each phase can be selectively activated or deactivated by means of the control and command unit 21, independently of the other power supply modules of the same phase, and of the other phases.

These power supply modules 24a, 24b, 24c behave, therefore, as power regulating means, allowing to supply a differentiated power supply for each of the electrodes 13a, 13b, 13c, in a manner independent from the other electrodes 13a, 13b, 13c.

Thanks to these power regulating means, the present power supply apparatus 10 has a considerable flexibility in its functioning, which is reflected in a considerable flexibility and efficiency in the functioning of the electric furnace 11.

This flexibility in the functioning, in fact, allows to "unbalance" the electric power supply supplied to the electrodes 13a, 13b 13c, in particular from the point of view of the power supplied and delivered. Fundamentally, if all the power supply modules of a determinate electrode are activated, it can be deduced that the power fed and supplied by this electrode is maximum, while in the extreme case that none of the power supply modules of a determinate electrode is powered, it can be deduced that this electrode is inactive. Therefore, each of the electrodes 13a, 13b 13c can be activated or deactivated, or the power it delivers can be regulated, independently of what happens to the other electrodes 13a, 13b 13c.

This unbalancing of the electrodes 13a, 13b 13c makes it possible to modify the length of the electric arcs between the different electrodes 13a, 13b 13c during the different phases of the melting, also as a function of the type of charge, using baskets or continuously, and/or the type of material to be melted, for example scrap, or pre-reduced iron. In this way, substantially, the power is sent where it is most needed.

The differentiation of the electric power supplied to the electrodes 13a, 13b 13c therefore allows to regulate the thermal power supplied by each of them, maximizing the thermal distribution in different zones of the electric furnace 11.

For example, with the loading system using baskets, therefore with central accumulation of the solid metal material M, the electrodes 13a, 13b 13c can be powered with the same electric power supply parameters, so as to obtain respective equal electric arcs in the central zone to create the liquid pool. In this case, a thermal power is obtained that is maximum in the central zone and minimum in correspondence with the walls of the electric furnace 11.

According to some embodiments, in the event the feed becomes of the continuous charge type, and it is carried out on one side of the container 12, it is possible to increase the length of the arc of the electrode or of the electrodes 13c in proximity to the discharge zone, that is, to the loading aperture 27 in order to intercept and melt the solid material more quickly. In this way, the distribution of the thermal energy is maximized in the proximity of the discharge zone, that is, where it is most required.

According to these embodiments, it can be provided to reduce the length of the electric arc of the electrodes 13a 13b furthest from the discharge zone, by turning off one or more of the respective power supply modules 24a, 24b, 24c, or keep them substantially constant in order to keep the temperature in the rest of the liquid metal bath uniform.

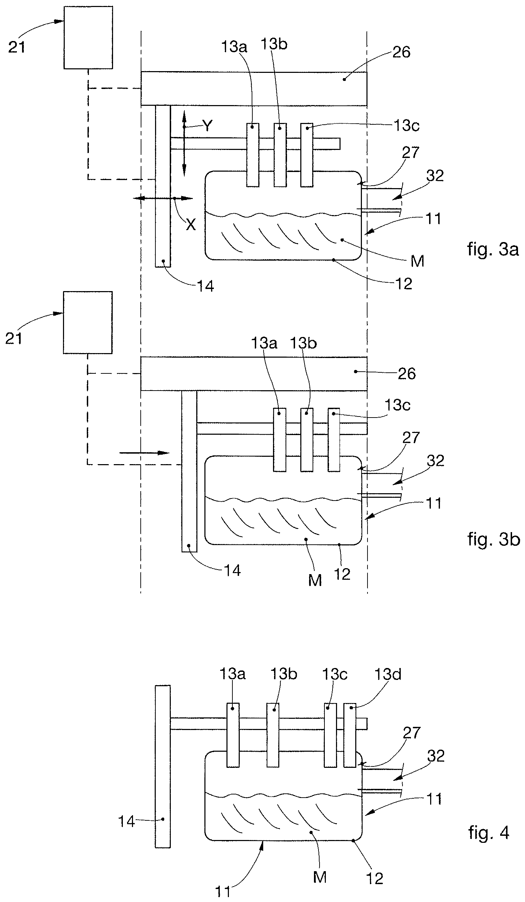

The differentiated regulation of the thermal power delivered by the electrodes 13a, 13b, 13c, 13d is obtained, or increased, by physically displacing the position of the electrodes 13a, 13b 13c during different phases of the process, see for example fig. 3a and fig. 3b.

In this regard, the electrodes 13a, 13b, 13c are associated with the transverse movement means 26, able to translate the electrodes in a direction X transverse to their longitudinal axis, or transverse to the direction Y, so as to move them toward/away from the walls of the container 12 and/or the other electrodes 13a-13d.

In the example schematically shown, the transverse movement means 26 can be such as to translate both the electrodes 13a, 13b, 13c, and also the vertical movement means 14.

According to other variants, not shown, transverse movement means 26 can be provided, each associated with one or more electrodes 13a, 13b, 13c, 13d and configured to move them together or in an independent manner one with respect to the other on a plane orthogonal to their longitudinal axis.

The possibility of displacing the electrodes 13a, 13b, 13c allows to position them as a function of the demand for energy, but also as a function of the phases of the process, that is, drilling, melting, refining.

For example, it is conceivable to start with the electrodes 13a, 13b, 13c in a central configuration in order to melt the basket necessary to form the liquid pool, as for example in fig. 3a, then displace the electrodes 13a, 13b, 13c, or only one or two of them, toward the edges in order to suitably melt the charge which can gradually be subsequently fed from the aperture 27 for the continuous charge of the metal material M.

In other words, the movement means 26 could also be associated with one or two electrodes, for example with the electrode 13c, so as to displace only this electrode 13c toward the aperture 27, for example when the material is fed through this aperture 27.

According to possible variants, each electrode 13a-13d can be provided with respective own vertical movement means 14 and transverse movement means 26.

According to further embodiments, for example shown in fig. 4, the electrodes can also be in a number greater than three, for example four electrodes 13a, 13b, 13c, 13d.

According to this embodiment, which can be combined with the previous ones, it is possible for example to provide a greater concentration of electrodes in the zone where the material is charged, that is, in the proximity of the aperture 27, see electrodes 13c and 13d. In this way, a diversification of the concentration of the electrodes is obtained, substantially on the basis of the requirements of the melting cycle.

This variable distribution of electrodes 13a, 13b, 13c, 13d, thanks also to the movement means 26, can be clearly different from what is shown in fig. 4 and can adapt to the power requirements of the various process phases, for example there can be provided a greater number of electrodes during melting and a smaller number during refining.

Preferably, the present power supply apparatus 10 is equipped with a series of sensors 28 able to detect and monitor in real time the distribution of energy in the different zones of the electric furnace 11. These sensors 28 are useful for managing the distribution of the electrodes 13a, 13b, 13c, 13d and/or the number of active electrodes 13a, 13b, 13c, 13d in a determinate phase of the melting cycle.

The sensors 28 can be, for example, sensors that detect data regarding the temperature of the panels of the furnace, the temperature of the bath of metal material M, the position of the electrodes 13a, 13b, 13c, 13d, the electrical parameters of the electrodes 13a, 13b, 13c, 13d, the weight of the container 12, the level of the bath of metal material M, and others.

The data collected by the sensors 28 can be collected and processed by the control unit 21. For example, an algorithm can be implemented in the control and command unit 21 to calculate the optimal energy distribution to be supplied as a function of the type of charge of scrap available, and the grade of steel to be obtained, also as a function of a previously collected data history.

According to some embodiments, the control and command unit 21, by means of the algorithm, can select the composition of the scrap to be used as a function of the grade of steel to be obtained and the availability over time of scrap in the scrap store.

The power supply method can also be selected by means of the algorithm, as a function of the charge available and how the melting process is proceeding.

According to some embodiments, the control and command unit 21 can be connected to a memory unit 29, able to collect the data of a determinate melting cycle and the history of the previous casting and melting cycles carried out by means of the electric furnace 11. The process control algorithm, starting from the data memorized in the memory unit 29, can be configured to develop an "ideal" model of a melting process, suitable to optimize melting times and energy consumptions as a function of the type of starting scrap or metal material and the grade of steel to be obtained.

The control and command unit 21 can therefore automatically determine and control the power supply and/or the positioning of one or more electrodes 13a, 13b, 13c, 13d, so that the melting process of the electric furnace 11 follows the pattern of the "ideal" model.

In this way, it is possible to set the electric furnace 11 in increasingly performing configurations, adjusting the power as a function of the charge and the outputs relating to the chemical composition of the product.

According to further embodiments, there can be provided devices for monitoring the continuous casting and/or rolling process downstream of the melting, in order to verify the working and rolling parameters of the metal along the casting and/or rolling lines downstream, and detect possible malfunctions or slowdowns in them. In this case, the control and command unit 21 can command a slowing down, or an interruption, of the charge of solid metal material M in the electric furnace 11, and consequently regulate the electric power supply and/or the position of the electrodes 13a,-13d in order to keep the molten metal bath at temperature.

The electric furnace 11 can also be equipped with at least one spectrometer 30 for the real-time reading of the chemical composition of the metal material M.

The present power supply apparatus 10 is therefore capable of self-regulating the power distribution, optimizing the times and electrical consumptions and in any case allowing to reach a chemical composition suitable for the production desired.

From a functional point of view, the present melting method in an electric furnace 11 comprises the following steps:
- a step of loading solid metal material M into an electric furnace 11;
- a step of electric power supply and generation of an electric arc between at least one electrode 13a, 13b, 13c and the metal material M;
- a step of melting the solid metal material M to obtain molten material.

The melting cycle carried out in the electric furnace 11 can comprise at least one step of drilling the metal material, and a melting step.

In accordance with possible embodiments, the melting cycle can also comprise a step of refining the molted material.

In particular, during the drilling step the electrodes 13a, 13b, 13c are taken close to the discharged solid metal material M, in order to ignite the electric arc and start the melting of the metal material M. As the metal material M progressively melts, the electrodes 13a, 13b, 13c penetrate the part of the metal material M that is still solid in order to progressively melt it. When the electrodes 13a, 13b, 13c reach a position inside the container 12, the actual melting of the remaining solid metal material M that surrounds the electrodes 13a, 13b, 13c begins.

The drilling step and the melting step can be repeated several times before the refining step, and between them there is provided a step of loading further metal material M into the electric furnace 11.

For example, it can be provided to carry out a charge of the metal material, drill the metal charge with the electrodes and melt it. This operating sequence is repeated three times for each charge of the metal material M.

The substantially continuous charge can also be provided, which begins before the drilling step and continues until the furnace is completely filled and during the step of melting the metal material.

The electric power supply step comprises;
- the supply, by means of the electric power grid 16, of a mains voltage Ur and a mains current Ir having a predefined mains frequency fr;
- the transformation, with the transformer 15, of the mains voltage Ur and mains current Ir into a base voltage Ub and a base current Ib which are selectively settable;
- the rectifying of the base voltage Ub and base current Ib with a plurality of rectifiers 19 in order to obtain a direct voltage and electric current;
- the conversion, with a plurality of converters 20, of the direct voltage and electric current into an alternating supply voltage Ua and an alternating supply current Ia which are selectively settable by means of the control and command unit 21 connected to the converters 20;
- the supply of the supply voltage Ua and supply current Ia to a plurality of electrodes 13a, 13b, 13c of the electric furnace 11.

According to some embodiments, the method provides to differentiate the power supply of the electrodes 13a, 13b, 13c in an independent manner one with respect to the other, in order to vary the respective lengths of the electric arcs and regulate the distribution of the thermal power inside the electric furnace 11 and maximize it in different zones of the electric furnace 11 as a function of one or several of either the phase of the melting cycle, the position of the solid metal material M in the electric furnace 11, or the type of metal material M to be melted.

According to some embodiments, the differentiated regulation of the power of each of the electrodes 13a, 13b, 13c can be carried out by activating or deactivating each of the power supply modules 24a, 24b, 24c associated with each of the electrodes 13a, 13b, 13c, so that a different electric power supply can possibly be supplied to each electrode, and so that each electrode supplies its own thermal power independently from the thermal power supplied by the other electrodes 13a, 13b, 13c.

In some embodiments, the method also provides to regulate the thermal power delivered by the electrodes 13a, 13b, 13c in a determinate zone of the electric furnace 11 by translating one or more electrodes 13a, 13b, 13c in a defined direction as a function of the demand for power in that determinate zone of the electric furnace 11 and/or in a determinate phase of the melting cycle.

According to further embodiments, during each phase of a melting cycle of the electric furnace 11, the regulating devices 22 of the control and command unit 21 regulate a supply electric frequency fa of the supply voltage Ua and supply current Ia, in an independent manner from the mains frequency fr, obtaining a regulation, possibly even instantaneous, of the reactance of the electric power supply apparatus 10 of the electric furnace 11.

According to alternative embodiments, in order to regulate the thermal power supplied by the electrodes in a determinate zone of the electric furnace, the method provides to displace the position of at least one electrode 13a, 13b, 13c, with respect to at least the walls of the furnace and the position of any other electrodes, as a function of at least one of either the phase of the melting cycle, the position of the solid metal material M in the electric furnace 11, or the type of metal material M to be melted so as to concentrate and/or increase the thermal power supplied by the electrodes in a determinate zone of the furnace.

It is clear that modifications and/or additions of steps and parts may be made to the melting method in an electric arc furnace and to the corresponding melting apparatus 10 as described heretofore, without departing from the field and scope of the appended claims.

It is also clear that, although the present invention has been described with reference to some specific examples, a person of skill in the art shall certainly be able to achieve many other equivalent forms of melting method in an electric arc furnace and corresponding melting apparatus 10, having the characteristics as set forth in the claims and hence all coming within the field of protection defined thereby.

## Claims

1. Melting method comprising:
- a step of loading solid metal material (M) into an electric furnace (11);
- a step of powering the electric furnace (11) and of generating an electric arc between at least one electrode (13a, 13b, 13c) and the metal material (M);
- a step of melting the solid metal material (M) to obtain molten material, wherein the step of powering comprises:
- the supply, by means of an electric power grid (16), of a mains voltage (Ur), and a mains current (Ir);
- the transformation, with at least one transformer (15) of said mains voltage (Ur) and mains current (Ir) into a base voltage (Ub) and a base current (Ib) which are selectively settable;
- the rectifying of said base voltage (Ub) and base current (Ib) with a plurality of rectifiers (19) to obtain a direct voltage and electric current;
- the conversion, with a plurality of converters (20), of said direct voltage and electric current into an alternating supply voltage (Ua) and alternating supply current (Ia) which are selectively settable by means of a control and command unit (21) connected to said converters (20);
- supplying said supply voltage (Ua) and supply current (Ia) to a plurality of electrodes (13a, 13b, 13c) of the electric furnace (11), wherein the method provides to regulate the power supply of the electrodes (13a, 13b, 13c) in an independent manner one with respect to the other, so as to vary the respective lengths of the electric arcs and automatically regulate the distribution of the thermal power inside the electric furnace (11) so as to maximize the thermal power in different zones of the electric furnace (11), that is to maximize the thermal power where it is most needed and to reduce it in the zones where it is sufficient to keep the metal, already in a liquid state, at temperature, as a function of one or several parameters considered, chosen from the phase of the melting cycle, the position or quantity of the solid metal material (M) in the electric furnace (11), and the type of metal material (M) to be melted, and wherein the method provides to regulate the thermal power delivered by the electrodes (13a, 13b, 13c) by translating the electrodes (13a, 13b, 13c) in a defined transverse direction (X) with respect to their longitudinal axis as a function of the demand for power in a determinate zone of the electric furnace (11) and/or in a determinate phase of the melting cycle.

2. Method as in claim 1, **characterized in that** each of said electrodes (13a, 13b, 13c) is connected to a plurality of power supply modules (24a, 24b, 24c) connected in parallel with each other to the electric power grid (16) and to the electric furnace (11), said differentiation of the power supply and automatic regulation of the power being carried out by means of the activation or deactivation of each of said power supply modules (24a, 24b, 24c), so that a different electric power supply can possibly be supplied to each electrode (13a, 13b, 13c), and so that each electrode (13a, 13b, 13c) supplies its own thermal power independently of the thermal power supplied by the other electrodes (13a, 13b, 13c).

3. Method as in any claim hereinbefore, **characterized in that** it provides to regulate the thermal power delivered by the electrodes (13a, 13b, 13c) by varying the number of electrodes (13a, 13b, 13c) in a determinate zone of the electric furnace (11) as a function of the demand for power in a determinate zone of the electric furnace (11) and/or in a determinate phase of the melting cycle.

4. Method as in any claim hereinbefore, **characterized in that** it comprises the detection, by means of sensors (28), of the distribution of energy in the different zones of the electric furnace (11) and the calculation, by means of an algorithm, of the optimal charge distribution for the electric furnace (11) as a function of the detected data.

5. Method as in claim 4, **characterized in that** it comprises memorizing the melting cycles and the energy distribution associated with each melting cycle, so that said control and command unit (21) can process an "ideal" model of a melting process and automatically self-regulate the thermal power delivered by the electrodes (13a, 13b, 13c) as a function of the data detected and memorized so that the, or each, melting cycle follows the pattern of said "ideal" model.

6. Apparatus for melting metal material (M) comprising an electric arc furnace (11) and an electric power supply apparatus (31) of the electric furnace (11), which comprises:
- at least one transformer (15) connected to an electric power grid (16) for supplying a mains voltage (Ur) and a mains current (Ir), having a predefined mains frequency (fr), said transformer (15) being configured to transform said mains voltage (Ur) and said mains current (Ir) respectively into an alternating base voltage (Ub) and an alternating base current (Ib);
- a plurality of rectifiers (19) connected to the transformer (15) and configured to transform said base voltage (Ub) and said base current (Ib) into direct voltage and electric current;
- a plurality of converters (20) connected to said rectifiers (19) and configured to convert direct voltage and current into an alternating supply voltage and current;
- a control and command unit (21) configured to control and command the functioning of said converters (20) and to regulate said supply voltage (Ua) and supply current (Ia) over time;
- power regulating means (24a, 24b, 24c) associated with, and controllable by, said control and command unit (21) and configured to regulate the power supply of the electrodes (13a, 13b, 13c) in an independent manner one with respect to the other in order to vary the respective lengths of the electric arcs and regulate the distribution of the thermal power inside the electric furnace (11) so as to maximize the thermal power in different zones of the electric furnace (11), that is to maximize the thermal power where it is most needed and to reduce it in the zones where it is sufficient to keep the metal, already in a liquid state, at temperature, as a function of one or several of either the phase of the melting cycle, the position or quantity of the solid metal material (M) in the electric furnace (11), or the type of metal material (M) to be melted;
- transverse movement means (26) configured to translate said electrodes (13a, 13b, 13c) in a defined direction (X) transverse to their longitudinal axis, so as to define diversified concentrations of them as a function of the demand for power in a determinate zone of the electric furnace (11) and/or in a determinate phase of the melting cycle.

7. Apparatus as in claim 6, **characterized in that** said power regulating means comprise a plurality of power supply modules (24a, 24b, 24c) connected, in parallel with each other, to said electric power grid (16) and to said electric furnace (11), and each associated with one of said electrodes (13a, 13b, 13c), wherein each of said power supply modules (24a, 24b, 24c) is provided with said transformer (15), said rectifiers (19) and said converters (20), wherein said power supply modules (24a, 24b, 24c) can be selectively activated and deactivated by said control and command unit (21) respectively to increase/decrease the power of the respective electrode (13a, 13b, 13c) with which they are associated.

8. Apparatus as in any claim from 6 or 7, **characterized in that** it comprises a plurality of sensors (28) distributed in various zones of the electric furnace (11) and configured to detect the distribution of energy in the electric furnace (11) and/or other, said sensors (28) being associated with said control and command unit (21).

9. Apparatus as in any claim from 6 to 8, **characterized in that** it comprises at least one memory unit (29) associated with said control and command unit (21) and configured to collect and memorize data of a determinate melting cycle and the history of the previous castings and melting cycles carried out by said electric furnace (11), and said control and command unit (21) is configured to regulate and diversify the power supply of said electrodes (13a, 13b, 13c) on the basis of the collected and memorized data.

10. Apparatus as in any claim from 6 to 9, **characterized in that** it comprises at least one spectrometer (30) configured for the real-time reading of the chemical composition of the metal material (M).

## Patentansprüche

1. Schmelzverfahren, mit:
- einem Schritt des Beladens von festem Metallmaterial (M) in einen Elektroofen (11);
- einem Schritt des Einschaltens des Elektroofens (11) und des Erzeugens eines elektrischen Lichtbogens zwischen mindestens einer Elektrode (13a, 13b, 13c) und dem Metallmaterial (M);
- einem Schritt des Schmelzens des festen Metallmaterials (M), um geschmolzenes Material zu erhalten, wobei der Schritt des Einschaltens umfasst:
- die Zuführung einer Netzspannung (Ur) und eines Netzstroms (Ir) über ein elektrisches Stromnetz (16);
- die Transformation der Netzspannung (Ur) und des Netzstroms (Ir) mit mindestens einem Transformator (15) in eine Basisspannung (Ub) und einen Basisstrom (Ib), die selektiv einstellbar sind;
- die Gleichrichtung der Basisspannung (Ub) und des Basisstroms (Ib) mit einer Vielzahl von Gleichrichtern (19), um eine Gleichspannung und einen elektrischen Strom zu erhalten;
- die Umwandlung der Gleichspannung und des elektrischen Stroms in eine Versorgungswechselspannung (Ua) und einen Versorgungswechselstrom (la) mit einer Vielzahl von Konvertern (20), die mittels einer mit den Konvertern (20) verbundenen Steuer- und Befehlseinheit (21) selektiv einstellbar sind;
- Zuführen der Versorgungsspannung (Ua) und des Versorgungsstroms (la) zu einer Vielzahl von Elektroden (13a, 13b, 13c) des Elektroofens (11), wobei das Verfahren vorsieht, die Energieversorgung der Elektroden (13a, 13b, 13c) unabhängig voneinander zu regeln, um die jeweiligen Längen der Lichtbögen zu variieren und die Verteilung der thermische Leistung im Inneren des Elektroofens (11) automatisch zu regeln, um die thermische Leistung in verschiedenen Zonen des Elektroofens (11) zu maximieren, nämlich die thermische Leistung dort zu maximieren, wo sie am meisten benötigt wird, und sie in den Zonen zu reduzieren, in denen sie ausreichend ist, um das Metall, das sich bereits im flüssigen Zustand befindet, auf Temperatur zu halten, als eine Funktion unter Berücksichtigung von einem oder mehreren Parametern, die aus der Phase des Schmelzzyklus, der Position oder der Menge des festen Metallmaterials (M) im Elektroofen (11) und der Art des zu schmelzenden Metallmaterials (M) ausgewählt werden, und wobei das Verfahren vorsieht, die von den Elektroden (13a, 13b, 13c) gelieferte thermische Leistung zu regulieren, indem die Elektroden (13a, 13b, 13c) in einer definierten Querrichtung (X) in Bezug auf ihre Längsachse als Funktion des Leistungsbedarfs in einer bestimmten Zone des Elektroofens (11) und/oder in einer bestimmten Phase des Schmelzzyklus verschoben werden.

2. Verfahren gemäß Anspruch 1, **dadurch gekennzeichnet, dass** jede der Elektroden (13a, 13b, 13c) mit einer Vielzahl von Energieversorgungsmodulen (24a, 24b, 24c) verbunden ist, die parallel zueinander an das elektrische Stromnetz (16) und an den Elektroofen (11) angeschlossen sind, wobei die Differenzierung der Energieversorgung und die automatische Regulierung der Leistung mittels der Aktivierung oder Deaktivierung jedes der Energieversorgungsmodule (24a, 24b, 24c) erfolgt, so dass jeder Elektrode (13a, 13b, 13c) eine andere elektrische Energieversorgung zugeführt werden kann und dass jede Elektrode (13a, 13b, 13c) ihre eigene thermische Leistung unabhängig von der thermischen Leistung der anderen Elektroden (13a, 13b, 13c) liefert.

3. Verfahren gemäß einem der vorhergehenden Ansprüche, **dadurch gekennzeichnet, dass** dieses vorsieht, die von den Elektroden (13a, 13b, 13c) gelieferte thermische Leistung zu regulieren, indem die Anzahl der Elektroden (13a, 13b, 13c) in einer bestimmten Zone des Elektroofens (11) als Funktion des Leistungsbedarfs in einer bestimmten Zone des Elektroofens (11) und/oder in einer bestimmten Phase des Schmelzzyklus verändert wird.

4. Verfahren gemäß einem der vorhergehenden Ansprüche, **dadurch gekennzeichnet, dass** dieses die Erfassung der Energieverteilung in den verschiedenen Zonen des Elektroofens (11) mittels Sensoren (28) und die Berechnung der optimalen Chargenverteilung für den Elektroofen (11) in Abhängigkeit von den erfassten Daten mittels eines Algorithmus umfasst.

5. Verfahren gemäß Anspruch 4, **dadurch gekennzeichnet, dass** dieses die Speicherung der Schmelzzyklen und der jedem Schmelzzyklus zugeordneten Energieverteilung umfasst, so dass die Steuer- und Befehlseinheit (21) ein "ideales" Modell eines Schmelzprozesses verarbeiten und die von den Elektroden (13a, 13b, 13c) gelieferte thermische Leistung in Abhängigkeit von den erfassten und gespeicherten Daten automatisch selbst regeln kann, so dass der oder jeder Schmelzzyklus dem Muster des "idealen" Modells folgt.

6. Vorrichtung zum Schmelzen von metallischem Material (M), die einen elektrischen Lichtbogenofen (11) und eine Vorrichtung (31) zur elektrischen Versorgung des elektrischen Ofens (11) aufweist, die aufweist:
- mindestens einen Transformator (15), der mit einem elektrischen Stromnetz (16) verbunden ist, um eine Netzspannung (Ur) und einen Netzstrom (Ir) mit einer vordefinierten Netzfrequenz (fr) zu liefern, wobei der Transformator (15) konfiguriert ist, um die Netzspannung (Ur) und den Netzstrom (Ir) jeweils in eine Basiswechselspannung (Ub) und einen Basiswechselstrom (Ib) umzuwandeln;
- eine Vielzahl von Gleichrichtern (19), die mit dem Transformator (15) verbunden sind und konfiguriert sind, um diese die Basisspannung (Ub) und diesen Basisstrom (Ib) in Gleichspannung und elektrischen Strom umzuwandeln;
- eine Vielzahl von Konvertern (20), die mit den Gleichrichtern (19) verbunden sind und konfiguriert sind, um Gleichspannung und -strom in eine Versorgungswechselspannung und -strom umzuwandeln;
- eine Steuer- und Befehlseinheit (21), die konfiguriert ist, um eine Funktion der Konverter (20) zu steuern und anzuweisen, und um die Versorgungsspannung (Ua) und den Versorgungsstrom (la) über die Zeit zu regulieren;
- eine Leistungsreguliereinrichtung (24a, 24b, 24c), die mit der Steuer- und Befehlseinheit (21) verbunden ist und von dieser gesteuert werden kann und konfiguriert ist, um die Energieversorgung der Elektroden (13a, 13b, 13c) unabhängig voneinander zu regulieren, um die jeweiligen Längen der Lichtbögen zu variieren und die Verteilung der thermischen Leistung innerhalb des Elektroofens (11) zu regulieren, um die thermische Leistung in verschiedenen Zonen des Elektroofens (11) zu maximieren, nämlich die thermische Leistung dort zu maximieren, wo sie am meisten benötigt wird, und sie in den Zonen zu reduzieren, in denen sie ausreicht, um das Metall, das sich bereits in einem flüssigen Zustand befindet, auf Temperatur zu halten, und zwar in Abhängigkeit von einer oder mehreren der Phasen des Schmelzzyklus, der Position oder Menge des festen Metallmaterials (M) im Elektroofen (11) oder der Art des zu schmelzenden Metallmaterials (M);
- eine Querbewegungseinrichtung (26), die konfiguriert ist, um die Elektroden (13a, 13b, 13c) in einer bestimmten Richtung (X) quer zu deren Längsachse zu verschieben, um unterschiedliche Konzentrationen von ihnen in Abhängigkeit von der Leistungsanforderung in einer bestimmten Zone des Elektroofens (11) und/oder in einer bestimmten Phase des Schmelzzyklus zu definieren.

7. Vorrichtung gemäß Anspruch 6, **dadurch gekennzeichnet, dass** die Leistungsreguliereinrichtung eine Vielzahl von Energieversorgungsmodulen (24a, 24b, 24c) umfasst, die parallel zueinander mit dem elektrischen Stromnetz (16) und dem Elektroofen (11) verbunden sind und jeweils einer der Elektroden (13a, 13b, 13c) zugeordnet sind, wobei jedes der Energieversorgungsmodule (24a, 24b, 24c) mit dem Transformator (15), den Gleichrichtern (19) und den Konvertern (20) versehen ist, wobei die Energieversorgungsmodule (24a, 24b, 24c) durch die Steuer- und Befehlseinheit (21) selektiv aktiviert bzw. deaktiviert werden können, um die Leistung der jeweiligen Elektrode (13a, 13b, 13c), mit der sie verbunden sind, zu erhöhen/zu verringern.

8. Vorrichtung gemäß einem der Ansprüche 6 oder 7, **dadurch gekennzeichnet, dass** diese eine Vielzahl von Sensoren (28) umfasst, die in verschiedenen Zonen des Elektroofens (11) verteilt sind und konfiguriert sind, um die Energieverteilung in dem Elektroofen (11) und/oder andere zu erfassen, wobei die Sensoren (28) mit der Steuer- und Befehlseinheit (21) verbunden sind.

9. Vorrichtung gemäß einem der Ansprüche 6 bis 8, **dadurch gekennzeichnet, dass** diese mindestens eine Speichereinheit (29) umfasst, die mit der Steuer- und Befehlseinheit (21) verbunden und so konfiguriert ist, dass diese Daten eines bestimmten Schmelzzyklus und die Historie der vorherigen Gieß- und Schmelzzyklen, die von dem Elektroofen (11) durchgeführt wurden, sammelt und speichert, und dass die Steuer- und Befehlseinheit (21) konfiguriert ist, um die Energieversorgung der Elektroden (13a, 13b, 13c) auf der Grundlage der gesammelten und gespeicherten Daten zu regulieren und diversifizieren.

10. Vorrichtung gemäß einem der Ansprüche 6 bis 9, **dadurch gekennzeichnet, dass** diese mindestens ein Spektrometer (30) aufweist, das für die Echtzeitablesung der chemischen Zusammensetzung des metallischen Materials (M) konfiguriert ist.

## Revendications

1. Procédé de fusion, comprenant :
- une étape de chargement d'un matériau métallique solide (M) dans un four électrique (11) ;
- une étape d'alimentation en puissance du four électrique (11) et de génération d'un arc électrique entre au moins une électrode (13a, 13b, 13c) et le matériau métallique (M) ;
- une étape de fusion du matériau métallique solide (M) afin d'obtenir un matériau fondu, dans lequel l'étape d'alimentation en puissance comprend :
- la fourniture, au moyen d'un réseau électrique (16), d'une tension de secteur (Ur) et d'un courant de secteur (Ir) ;
- la transformation, à l'aide d'au moins un transformateur (15), de ladite tension de secteur (Ur) et dudit courant de secteur (Ir) en une tension de base (Ub) et un courant de base (Ib) qui peuvent être réglés de manière sélective ;
- le redressement de ladite tension de base (Ub) et dudit courant de base (Ib) à l'aide d'une pluralité de redresseurs (19) pour obtenir une tension continue et un courant électrique ;
- la conversion, à l'aide d'une pluralité de convertisseurs (20), de ladite tension continue et dudit courant électrique en une tension d'alimentation alternative (Ua) et un courant d'alimentation alternatif (Ia) qui peuvent être réglés de manière sélective au moyen d'une unité de contrôle et de commande (21) connectée auxdits convertisseurs (20) ;
- la fourniture de ladite tension d'alimentation (Ua) et dudit courant d'alimentation (la) à une pluralité d'électrodes (13a, 13b, 13c) du four électrique (11), dans lequel le procédé prévoit de réguler l'alimentation en puissance des électrodes (13a, 13b, 13c) de manière indépendante les unes par rapport aux autres, de manière à faire varier les longueurs respectives des arcs électriques et à réguler automatiquement la distribution de la puissance thermique à l'intérieur du four électrique (11) de manière à maximiser la puissance thermique dans différentes zones du four électrique (11), c'est-à-dire de maximiser la puissance thermique là où elle est la plus nécessaire et de la réduire dans les zones où il suffit de maintenir le métal, déjà à l'état liquide, à température, en fonction d'un ou plusieurs paramètres considérés, choisis parmi la phase du cycle de fusion, la position ou la quantité du matériau métallique solide (M) dans le four électrique (11), et le type de matériau métallique (M) à fondre, et dans lequel le procédé prévoit de réguler la puissance thermique délivrée par les électrodes (13a, 13b, 13c) par translation des électrodes (13a, 13b, 13c) dans une direction transversale définie (X) par rapport à leur axe longitudinal en fonction de la demande de puissance dans une zone déterminée du four électrique (11) et/ou dans une phase déterminée du cycle de fusion.

2. Procédé selon la revendication 1, **caractérisé en ce que** chacune desdites électrodes (13a, 13b, 13c) est connectée à une pluralité de modules d'alimentation en puissance (24a, 24b, 24c) connectés, en parallèle les uns par rapport aux autres, au réseau électrique (16) et au four électrique (11), ladite différenciation de l'alimentation en puissance et de la régulation automatique de la puissance étant effectuées au moyen de l'activation ou de la désactivation de chacun desdits modules d'alimentation en puissance (24a, 24b, 24c), de sorte qu'une alimentation électrique différente peut éventuellement être fournie à chaque électrode (13a, 13b, 13c), et de sorte que chaque électrode (13a, 13b, 13c) fournit sa propre puissance thermique indépendamment de la puissance thermique fournie par les autres électrodes (13a, 13b, 13c).

3. Procédé selon l'une quelconque des revendications précédentes, **caractérisé en ce qu'**il prévoit une régulation de la puissance thermique délivrée par les électrodes (13a, 13b, 13c) en faisant varier le nombre d'électrodes (13a, 13b, 13c) dans une zone déterminée du four électrique (11) en fonction de la demande de puissance dans une zone déterminée du four électrique (11) et/ou dans une phase déterminée du cycle de fusion.

4. Procédé selon l'une quelconque des revendications précédentes, **caractérisé en ce qu'**il comprend la détection, au moyen de capteurs (28), de la distribution d'énergie dans les différentes zones du four électrique (11) et le calcul, au moyen d'un algorithme, de la distribution de charge optimale pour le four électrique (11) en fonction des données détectées.

5. Procédé selon la revendication 4, **caractérisé en ce qu'**il comprend la mémorisation des cycles de fusion et de la distribution d'énergie associée à chaque cycle de fusion, de sorte que ladite unité de contrôle et de commande (21) puisse traiter un modèle "idéal" d'un processus de fusion et autoréguler automatiquement la puissance thermique délivrée par les électrodes (13a, 13b, 13c) en fonction des données détectées et mémorisées de sorte que le, ou chaque, cycle de fusion suive le motif dudit modèle "idéal".

6. Appareil de fusion de matériau métallique (M) comprenant un four à arc électrique (11) et un appareil d'alimentation électrique (31) du four électrique (11), qui comprend :
- au moins un transformateur (15) connecté à un réseau électrique (16) pour fournir une tension de secteur (Ur) et un courant de secteur (Ir), ayant une fréquence de secteur prédéfinie (fr), ledit transformateur (15) étant configuré pour transformer ladite tension de secteur (Ur) et ledit courant de secteur (Ir) respectivement en une tension de base alternative (Ub) et un courant de base alternatif (Ib) ;
- une pluralité de redresseurs (19) connectés au transformateur (15) et configurés pour transformer ladite tension de base (Ub) et ledit courant de base (Ib) en tension continue et en courant électrique ;
- une pluralité de convertisseurs (20) connectés auxdits redresseurs (19) et configurés pour convertir une tension et un courant continus en une tension et un courant d'alimentation alternatifs ;
- une unité de contrôle et de commande (21) configurée pour contrôler et commander le fonctionnement desdits convertisseurs (20) et pour réguler ladite tension d'alimentation (Ua) et ledit courant d'alimentation (la) au fil du temps ;
- des moyens de régulation de puissance (24a, 24b, 24c) associés à, et pouvant être contrôlés par, ladite unité de contrôle et de commande (21) et configurés pour réguler l'alimentation électrique des électrodes (13a, 13b, 13c) de manière indépendante les unes par rapport aux autres afin de faire varier les longueurs respectives des arcs électriques et de réguler la distribution de la puissance thermique à l'intérieur du four électrique (11) de manière à maximiser la puissance thermique dans différentes zones du four électrique (11), c'est-à-dire à maximiser la puissance thermique là où elle est la plus nécessaire et à la réduire dans les zones où il suffit de maintenir le métal, déjà à l'état liquide, à température, en fonction d'un ou de plusieurs parmi la phase du cycle de fusion, de la position ou la quantité de matériau métallique solide (M) dans le four électrique (11), ou le type de matériau métallique (M) à fondre ;
- des moyens de déplacement transversal (26) configurés pour déplacer lesdites électrodes (13a, 13b, 13c) en translation dans une direction définie (X) transversale à leur axe longitudinal, de manière à définir des concentrations diversifiées de celles-ci en fonction de la demande de puissance dans une zone déterminée du four électrique (11) et/ou dans une phase déterminée du cycle de fusion.

7. Appareil selon la revendication 6, **caractérisé en ce que** lesdits moyens de régulation de puissance comprennent une pluralité de modules d'alimentation de puissance (24a, 24b, 24c) connectés, parallèlement les uns aux autres, audit réseau électrique (16) et audit four électrique (11), et chacun associé à l'une desdites électrodes (13a, 13b, 13c), dans lequel chacun desdits modules d'alimentation de puissance (24a, 24b, 24c) est pourvu dudit transformateur (15), desdits redresseurs (19) et desdits convertisseurs (20), dans lequel lesdits modules d'alimentation de puissance (24a, 24b, 24c) peuvent être activés et désactivés de manière sélective par ladite unité de contrôle et de commande (21) respectivement pour augmenter/diminuer la puissance de l'électrode respective (13a, 13b, 13c) à laquelle ils sont associés.

8. Appareil selon l'une quelconque des revendications 6 ou 7, **caractérisé en ce qu'**il comprend une pluralité de capteurs (28) répartis dans diverses zones du four électrique (11) et configurés pour détecter la distribution d'énergie dans le four électrique (11) et/ou autre, lesdits capteurs (28) étant associés à ladite unité de contrôle et de commande (21).

9. Appareil selon l'une quelconque des revendications 6 à 8, **caractérisé en ce qu'**il comprend au moins une unité de mémoire (29) associée à ladite unité de contrôle et de commande (21) et configurée pour collecter et mémoriser des données d'un cycle de fusion déterminé et l'historique des coulées précédentes et des cycles de fusion effectués par ledit four électrique (11), et ladite unité de contrôle et de commande (21) est configurée pour réguler et diversifier l'alimentation de puissance desdites électrodes (13a, 13b, 13c) sur la base des données collectées et mémorisées.

10. Appareil selon l'une quelconque des revendications 6 à 9, **caractérisé en ce qu'**il comprend au moins un spectromètre (30) configuré pour la lecture en temps réel de la composition chimique du matériau métallique (M).
